# EUROPEAN PATENT APPLICATION

(11) **EP 1 591 235 A1**
(43) Date of publication of application: **02.11.2005**
(21) Application number: 05075826.7
(22) Date of filing: 07.04.2005
(51) Int. Cl.: B32B 27/00, C08J 9/36, A47C 27/14

(54) **Method for manufacturing a laminated foam article, a foam article thus obtained and the use thereof**

(30) Priority: 09.04.2004 NL 1025922
(71) Applicant: Zuid-Nederlandse Clubmeubelfabriek B.V., 5928 NL Venlo (NL)
(72) Inventor: Schraven, Leonardus Petrus Maria, 5863 BZ Blitterswijck (NL)
(74) Representative: Valkonet, Rutger

(57) **Abstract**

The present invention relates to a method of manufacturing a laminated foam article, as well as to a laminated foam article obtained by using such a method. The present invention furthermore relates to the use of such a foam article. One aspect of the present invention is to provide a method of manufacturing a laminated foam article, which foam article is composed of at least two durably bonded-together layers, the outer layer of which can be provided in any desired colour.

## Description

The present invention relates to a method of manufacturing a laminated foam article as well as to a laminated foam article obtained by using such a method. The present invention furthermore relates to the use of such a foam article.

European patent application No. 04075149.7 (not prepublished) discloses a method wherein a foam substrate is provided with two separate layers, in particular a thermoplastic film and an elastomeric coating.

The method referred to in the introduction is known per se from German Offenlegungsschrift DE 199 15314, wherein an upper foil comprising a layer based on a mixture of (meth)acrylate rubber and EVA having a layer thickness of 50 - 150 µm is laminated onto a lower foil based on a mixture of PP block copolymer and LLDPE by co-extrusion at a temperature of 200 °C for the upper foil 1 and 260 °C for the lower foil, the joint thickness of said upper and said lower foil being 0.3 - 1.5 mm. A composite layer thus obtained can be directly adhered to a substrate or be adhered to a foam layer by using an adhesive layer, which foam layer has a thickness of 2 - 3 mm. The substrate that is used has a geometric shape without folds and without places that are difficult of access, so that a foil obtained by means of a co-extrusion process can be used only with such a substrate. The laminated material thus obtained can be used as an instrument panel, a side wall element or as a door panelling material for cars.

A method of manufacturing a laminated foam article is furthermore known from European patent application No. 0 305 219, wherein an adhesive is applied to one surface of a compressible foam layer, after which the adhesive-bearing surface is contacted with a layer of cover material to form a so-called bilayer. Then the layer of cover material is contacted with a heated die to compress several regions of the foam layer under the influence of pressure and heat, which compressed regions will melt and collapse to form an embossed pattern in the bilayer. Such a laminated foam article can subsequently be cut to the desired length and be used for a number of purposes such as seat cushions, back cushions, and the like. Both synthetic and natural fabrics, blown or cast films, or animal skins and the like are mentioned as suitable cover materials, with the special choice of cover material being indicated by the intended use of the laminate product. The embossed pattern is provided for decorative purposes. A drawback of such a method is the fact that an adhesive is required for durably bonding the cover material to the foam substrate. The use of an adhesive requires that the substrate be coated with a thin layer of adhesive over the entire surface thereof, so that no regions are formed in which an inadequate bond to the supporting surface is obtained. An additional drawback of the use of an adhesive is the fact that there is a risk of the adhesive on the foam article becoming visible through the cover material after some time when cover materials in light colours are used, which is undesirable, in particular when the article is used for seat cushions and the like. It can furthermore be noted in this connection that if an intricately shaped foam article is used, which article not only has right-angled parts but also irregularly curved parts, the cover material with which the foam article is to be covered is insufficiently capable of enclosing the geometric shapes of the foam article, so that folds, wrinkles and the like are formed, which users generally experience as undesirable.

From German Patentschrift DE 195 17 702 C1 there is known an aqueous dispersion, which is used as a lubricant to make it easier to upholster a polyurethane foam article. Such a lubricant is applied by means of a spray gun, forming a lubricant film on the foam article that makes it easier to provide the upholstery in a subsequent step, whilst in addition the well-known unpleasant "creaking sounds" are said to be eliminated.

From Swiss Patentschrift No. 431 048 there is known a method for coating polyurethane foam with a homogeneous layer of polyurethane, which material is used as a sole material, for example for sports shoes.

From British patent No. 1 250 479 there is known a sound-absorbing material comprising a flexible polyurethane foam having adhered to its surface a microporous film of an elastomer, preferably a polyurethane. A sound-absorbing material obtained in this manner can be used in buildings and in automobiles, for example.

European patent application No. 0 047 086 relates to a resilient foam material which has been made flame retardant by coating the foam material with a layer of a special vinylidene chloride polymer.

From the present applicant's prior Dutch patent application No. 9300960 there is known a couch provided with movable back cushions, wherein a cushion is movably connected to the frame, to which frame a rail is connected, and wherein the cushion comprises at least one element that mates with said rail for guiding the cushion along the rail. Further details with regard to the method of manufacturing such a cushion are not mentioned in said document.

One aspect of the present invention is to provide a method of manufacturing a laminated foam article, which foam article does not have the aforesaid drawbacks.

Another aspect of the present invention is to provide a method of manufacturing a laminated foam article, which foam article is composed of at least two durably bonded-together layers, the outer layer of which can be provided in any desired colour.

Yet another aspect of the present invention is to provide a method of manufacturing a laminated foam article, which foam article is ready for use as a piece of furniture without the stitching of separate materials and the subsequent covering of the foam article therewith by an upholsterer being required.

Another aspect of the present invention is to provide a laminated foam article having the appearance of a foam material enveloped in an upholstery material, which can furthermore be cleaned by means of a moist cloth.

One aspect of the present invention is furthermore to provide a laminated foam article wherein the construction and the structure of layers is such that frequent compression and springing back of the laminated foam article will not result in the formation of cracks in the laminated foam article.

The method as referred to in the introduction is characterized in that it comprises the following steps:
i) providing a foam substrate,
ii) applying a thermoplastic film to the foam substrate, and
iii) applying an elastomeric coating to the thermoplastic film as obtained in step ii), and
iv) applying an additional elastomeric coating to said elastomeric coating, in which additional elastomeric coating a flock material is incorporated.

One or more of the objects as mentioned above will be accomplished by using the present method, in particular a foam material having a felty or flocky appearance will be obtained. The foam article can be given any desired colour by using a coloured flock material. Suitable flock materials are in particular nylon-based flock materials, preferably polyhexamethyleneadipin amide. The flock material that is used preferably has a length of less than 2 mm, in particular a length in the 0.5-1.5 mm range. An especially desirable dTex value ranges from 1-8, preferably 1.5-7.

Although the present method makes mention of the individual steps i)-vii), the steps i)-vii) need not be carried out by the same operator. In a specific embodiment it is moreover possible to refrain from using the additional elastomeric coating, in which case the flock material is directly incorporated in the elastomeric coating according to step iii), which means that step iv) is left out.

The present method has appeared to be satisfactory in practice for retaining the resilient characteristics of the foam material, because the layers being applied do not form rigid layers. Using the method according to the present invention, the elastic characteristics of the foam material are practically fully retained, and in addition no delamination is to be expected due to the choice of the two elastomeric coatings.

In a special embodiment, step iii) is preferably substituted for, respectively, step v) and step vi), which comprise:
v) applying a layer of a plastic dispersion to the thermoplastic film as obtained in step ii), and
vi) applying an elastomeric coating to the layer of a plastic dispersion as obtained in step v).

In such an embodiment the laminated foam article will comprise a combination of layers , viz. a first thermoplastic film, a second layer of a plastic dispersion, a third elastomeric coating and a fourth elastomeric coating provided with flock material. The second layer of a plastic dispersion in particular functions to make the final foam article feel full to the touch and give it a rich aura. In a special embodiment it is also possible, however, to incorporate the flock material directly in an elastomeric coating, so that the aforesaid fourth elastomeric coating is not needed, no more than, possibly, the layer of a plastic dispersion.

It is in particular preferable to apply the thermoplastic film in a thickness of 2-8 µm, with a thickness of about 4 µm being especially desirable.

It is furthermore preferably to apply the elastomeric coating in a thickness of 10-50 µm, with a thickness of 30 µm being especially preferred.

It is furthermore preferable to apply the layer of a plastic dispersion in a thickness of 20-100 µm, with a thickness of 60 µm being especially preferred.

An advantageous effect of the use of the aforesaid layer thicknesses is that the physical characteristics of the foam substrate, in particular the flexible nature thereof, are retained, which is very important, e.g. when the substrate is used to form a piece of furniture.

The layers that are separately and successively applied in the present method exhibit an elasticity and mutual compatibility such that no cracks will form therein upon compression and springing back, not even after prolonged intensive use.

The foam substrate as used in step i) of the present method is preferably a polyurethane-based foam. Polyurethane is a polymer which is obtained through condensation of a polyisocyanate and a hydroxyl- containing material, generally a polyol. In order to make polyurethane "foam" for the purpose of forming a polyurethane foam, a bubble formation reaction is induced through the use of a blowing agent. The blowing agent may comprise one or more substances which evaporate during the reaction between polyisocyanate and polyol, such as a fluorocarbon compound, or the blowing agent may chemically react with the isocyanate to form a gas, such as the reaction of water with isocyanate, as a result of which carbon dioxide is released, which carbon dioxide functions as a blowing agent. It is in particular desirable for the polyurethane foam to have a density in the 15-75 kg/m³ range.

The thermoplastic film applied in step ii) of the present invention is preferably a polyurethane-based thermoplastic film. The thermoplastic film in particular functions to seal the pores and openings that are present in the foam substrate. After the thermoplastic film has been applied to the foam substrate, the pores and openings that are present in the foam substrate are completely sealed, so that the layer to be subsequently applied to the thermoplastic film cannot enter the foam substrate. In addition to that, the thermoplastic film must be regarded as an intermediate layer or support layer for each layer to be additionally applied. Such a thermoplastic layer is in particular desirable in order to retain the resilient characteristics of the substrate. Moreover, the thermoplastic layer will be capable of maintaining a durable bond with the substrate, because of the plastic nature of such a layer.

Furthermore it is desirable to use a polyurethane-based, 2-component elastomer composition as the elastomeric coating.

Furthermore it is desirable in specific embodiments to add one or more components selected from the group consisting of liquefiers, pigments, solvents and crosslinking enhancers to the composition for forming the thermoplastic film. In addition it is desirable in specific embodiments to add one or more components selected from the group consisting of liquefiers, pigments, solvents, crosslinking enhancers, UV light-absorbing agents and flame retardants to the composition for forming the elastomeric coating.

Since a foam substrate having irregular geometric shapes is generally used in step i) in practice, steps ii)-vi) are preferably carried out by spraying. Since each layer is separately applied by means of a spray gun, it is possible to apply a layer to all the places on the substrate that are difficult of access. The flock material used in the present method is preferably incorporated in a water-based coating with a base of acrylic polymer through the use of electrostatic equipment.

The present invention furthermore relates to a laminated foam article built up of, successively, a foam substrate, a thermoplastic film, a first elastomeric coating and an elastomeric coating provided with flock material, and in a special embodiment a layer of a plastic dispersion is present between said thermoplastic film and said first elastomeric coating.

The laminated foam article obtained by using the present method is in particular used in a situation in which an element of a slightly resilient nature is required, in particular in the field of mattresses and pieces of furniture, in which connection couches, footstools, chairs, headrests and footrests, bean-bag seats, as well as playground equipment and cushions for chairs are to be considered. Also cushions used in the treatment of cancer patients are included in the desired application. The chairs based on the present laminated foam article are suitable for use as desk chairs or conference chairs, but also as chairs for handicapped people. In addition, the present laminated foam article is also suitable for use in wet spaces, for example as a toilet mat, a bathroom mat or a shower mat, a shower stool, a bathtub, a water bed rim or a head support in a bathtub. Other applications include products from the aviation industry, the medical industry and the orthopaedic industry, where resiliency is required. The laminated foam article obtained by using the present method may also be mounted on a rigid support, which, after being fitted with associated legs and possibly with a backrest and armrests, can be used as a chair. Also articles of use such as lampshades can be made from the present laminated material. It is also possible, however, to manufacture a construction, especially a piece of furniture, in particular a chair, substantially entirely from the laminated foam article.

## Claims

1. A method of manufacturing a laminated foam article, **characterized in that** the method comprises the following steps:
i) providing a foam substrate,
ii) applying a thermoplastic film to the foam substrate, and
iii) applying an elastomeric coating to the thermoplastic film as obtained in step ii), and
iv) applying an additional elastomeric coating to said elastomeric coating, in which additional elastomeric coating a flock material is incorporated.

2. A method according to claim 1, **characterized in that** step iii) is substituted for, respectively, step v) and step vi), which comprise:
v) applying a layer of a plastic dispersion to the thermoplastic film as obtained in step ii), and
vi) applying an elastomeric coating to the layer of a plastic dispersion as obtained in step v).

3. A method according to claim 1, **characterized in that** steps iii)-iv) are substituted for a step vii), comprising
vii) applying an elastomeric coating to the thermoplastic film as obtained in step ii), in which elastomeric coating a flock material is incorporated.

4. A method according to any one or more of the preceding claims, **characterized in that** the thermoplastic film is applied in a thickness of 2-8 µm.

5. A method according to any one or more of the preceding claims, **characterized in that** the elastomeric coating is applied in a thickness of 10-50 µm.

6. A method according to any one or more of the claims 2-5, **characterized in that** the layer of a plastic dispersion is applied in a thickness of 20-100 µm

7. A method according to any one or more of the preceding claims, **characterized in that** a polyurethane-based foam is used as the foam substrate.

8. A method according to claim 6, **characterized in that** the polyurethane foam has a density in the 15-75 kg/m³ range.

9. A method according to any one or more of the preceding claims, **characterized in that** a polyurethane-based, thermoplastic film is used as the thermoplastic film.

10. A method according to any one or more of the preceding claims, **characterized in that** a polyurethane-based, 2-component elastomer composition is used as the elastomeric coating.

11. A method according to any one or more of the preceding claims, **characterized in that** one or more components selected from the group consisting of liquefiers, pigments, solvents and crosslinking agents are added to the composition for forming the thermoplastic film.

12. A method according to any one or more of the preceding claims, **characterized in that** one or more components selected from the group consisting of liquefiers, pigments, solvents, crosslinking enhancers, UV light-absorbing agents and flame retardants are added to the composition for forming the elastomeric coating.

13. A method according to any one or more of the preceding claims, **characterized in that** one or more of the steps ii)-vii) are carried out by spraying.

14. A laminated foam article built up of, successively, a foam substrate, a thermoplastic film, an elastomeric coating and an elastomeric coating provided with flock material.

15. A laminated foam article according to claim 14, **characterized in that** the flock material has a dTex value in the 1-8 range.

16. A laminated foam article according to any one or more of the claims 14-15, **characterized in that** the flock material has a length in the 0.5-1.5 mm range.

17. A laminated foam article according to any one or more of the claims 14-16, **characterized in that** a layer of a plastic dispersion is present between said thermoplastic film and said elastomeric coating.

18. A laminated foam article according to any one or more of the claims 14-17, **characterized in that** said thermoplastic film has a layer thickness of 2-8 µm.

19. A laminated foam article according to claims 14-18, **characterized in that** said elastomeric coating has a layer thickness of 10-50 µm.

20. A laminated foam article according to claims 17-19, **characterized in that** said layer of a plastic dispersion has a layer thickness of 20-100 µm.

21. Use of a laminated foam article according to any one or more of the claims 14-20 as a piece of furniture.

22. Use of a laminated foam article according to any one or more of the claims 14-20 as a cushion.

23. Use of a laminated foam article according to any one or more of the claims 14-20 as a playground apparatus.

24. Use of a laminated foam article according to any one or more of the claims 14-20 as a mat in a wet space.

25. Use of a laminated foam article according to any one or more of the claims 14-20 as a bathtub.

26. Use of a laminated foam article according to any one or more of the claims 14-20 as a mattress.
